Europäisches Patentamt

European Patent Office

Office européen des brevets

(11) Publication number: **0 130 513**
**A2**

# (12) EUROPEAN PATENT APPLICATION

(21) Application number: **84107241.6**

(22) Date of filing: **23.06.84**

(51) Int. Cl.⁴: **G 02 B 6/24**

(30) Priority: **26.06.83 US 517194**

(43) Date of publication of application: **09.01.85**
**Bulletin 85/2**

(84) Designated Contracting States: **DE FR GB**

(71) Applicant: **ALLIED CORPORATION, Columbia Road and Park Avenue P.O. Box 2245R (Law Dept.), Morristown New Jersey 07960 (US)**

(72) Inventor: **Essert, Robert D., 124 Vassar Road, Poughkeepsie New York 12603 (US)**

(74) Representative: **Brullé, Jean et al, Service Brevets Bendix 44, rue François 1er, F-75008 Paris (FR)**

(54) **Fiber optic connector.**

(57) A connector for a fiber optic cable securely retains the optical fiber without the use of adhesives, and uses a basic assembly step to simultaneously retain the optical fiber. In a first embodiment, the step of crimping a crimping ferrule to retain strength fiber members of the fiber optic cable simultaneously collapses a portion of the connector to securely retain the optical fiber in the connector. In a second embodiment of the invention, the step of inserting an inner member into the connector body causes an end portion to collapse, securely retaining the optical fiber, and may also cause an intermediate portion of the inner member to collapse, securely retaining a buffer or inner jacket layer. Such a fiber optic connector may be made either entirely of metal, or of plastic, without substantial structural modification, as appropriate for use in its intended environment.

FIBER OPTIC CONNECTOR

This application is related to the field of connectors. In particular, this application is related to a fiber optic connector, wherein one of the assembly steps automatically results in retention of a portion of the fiber optic cable.

## BACKGROUND OF THE INVENTION

Numerous types of fiber optic connectors are well-known, and are commercially available. In preparation for using such a connector, the outer jacket is removed from the fiber optic cable for a predetermined distance, exposing the underlying strength fiber members. The strength fiber members are moved aside or folded back to expose the inner jacket, which is then removed to expose the buffer. The buffer is then removed, exposing the tip of the optical fiber. As will be apparent, some of these steps may be omitted from some types of fiber optic cables, since the inner jacket may be omitted, and the strength fiber member may be omitted in commercially-available fiber optic cables. The fiber itself is conventionally glued into place, in some type of centering device or adjacent an end surface of the connector, and the inner jacket or buffer is also glued into the connector. The strength member, if provided, may be either glued to the connector or retained to the connector by crimping. As will be apparent, these connector types, utilizing glues or adhesives, are difficult and time consuming to assemble, since the optical fiber may move during curing time, and the curing time of the glue or adhesive itself renders assembly of such a connector a lengthy task.

It is also known to retain the optical fiber without the use of adhesives. Various commercially-available connectors utilize a clamping collet, which engages the buffer member, and is actuated to clamp the buffer member by threadably engaging a rear element of the connector to the main body of the connector, urging the clamping element to contract. Also, a commercially-available optical fiber connector uses a group of three metallic rods, through which the optical fiber passes, which are crimped together to retain the optical fiber. In this connector, a second crimping operation is used to entrap folded-back strength members. Thus, known fiber optic connectors either utilize a glue or adhesive, with its attendant disadvantages, or a plurality of crimping operations, in addition to the typical operations of severing the tip of the optical fiber and polishing the remaining end to optical flatness.

The instant invention overcomes these and other deficiencies of the prior art.

## SUMMARY OF THE INVENTION

The instant invention provides a fiber optic connector wherein a simple and conventional assembly step also provides captivation and retention of the optical fiber. In a first embodiment of the invention, the conventional operation of crimping a crimping sleeve into place, to retain the folded-back strength members of the fiber optic cable in place between the body of the connector and a crimping sleeve, also causes the optical fiber to be securely held. In a second embodiment of the invention, inserting a centering or alignment device into the body of the connector, a conventional step in the assembly of many conventional connectors, also causes the optical fiber to be retained. The same operation may also entrap the first layer concentric with the optical fiber, which may be either a buffer or an inner jacket, depending on the construction of the optical fiber cable.

Thus, it is an object of the invention to provide an optical fiber connector wherein a step in its assembly both moves portions of the connector into their assembled relationship and causes captivation of the optical fiber.

It is a feature of a first embodiment of the invention that crimping a crimping sleeve to retain the strength member causes the body of the connector to be deformed radially inward, bearing upon a collet means and seizing the optical fiber.

It is a feature of a second embodiment of the invention that the action of emplacing a centering means into the body of the connector causes the optical fiber to be seized.

It is a primary advantage of the invention that the assembly of an optical fiber connector according to the invention may be greatly facilitated.

Thus, it is a first objective of the invention to provide a fiber optic cable connector having a body means, a collet means and a crimping ferrule means, the collet means having a bore therethrough and a first collet end portion for retaining the core fiber of the fiber optic cable, the body means having a first end for receiving the fiber core therethrough, and a second end portion including a first bore portion for receiving the collet means therein. The crimping ferrule is adapted to be disposed about and enclose an exterior surface portion of the body means and entrap the strength member of the fiber optic cable therebetween. The exterior surface portion includes a protrusion shown as a protruding annular ring which is adapted to be deformed radially inward by the crimping ferrule, deforming the body means radially inward adjacent the first collet end portion of the collet means, to cause it to seize the core of the fiber optic cable.

It is a second objective of the invention to provide a fiber optic cable connector having a body means, a collet means and a crimping ferrule means, the collet means having a bore therethrough and a first collet end portion adapted to retain the core of the fiber optic cable, and the body means having an axial bore for receiving the collet means. The bore in the body has a first tapered portion adjacent a first end of the body means, the tapered portion being adapted to urge the collet end portion radially inwardly to seize the core of the fiber optic cable as the collet is inserted into the body. The bore may also include a second tapered portion, for cooperating with a radially protruding portion on the exterior surface of the collet means for urging a portion of the collet means radially inwardly to seize the buffer or inner jacket of the fiber optic cable as the collet means is inserted into the body means.

Other objectives, features and advantages of the invention will become apparent from the detailed description which follows.

## BRIEF DESCRIPTION OF THE DRAWINGS

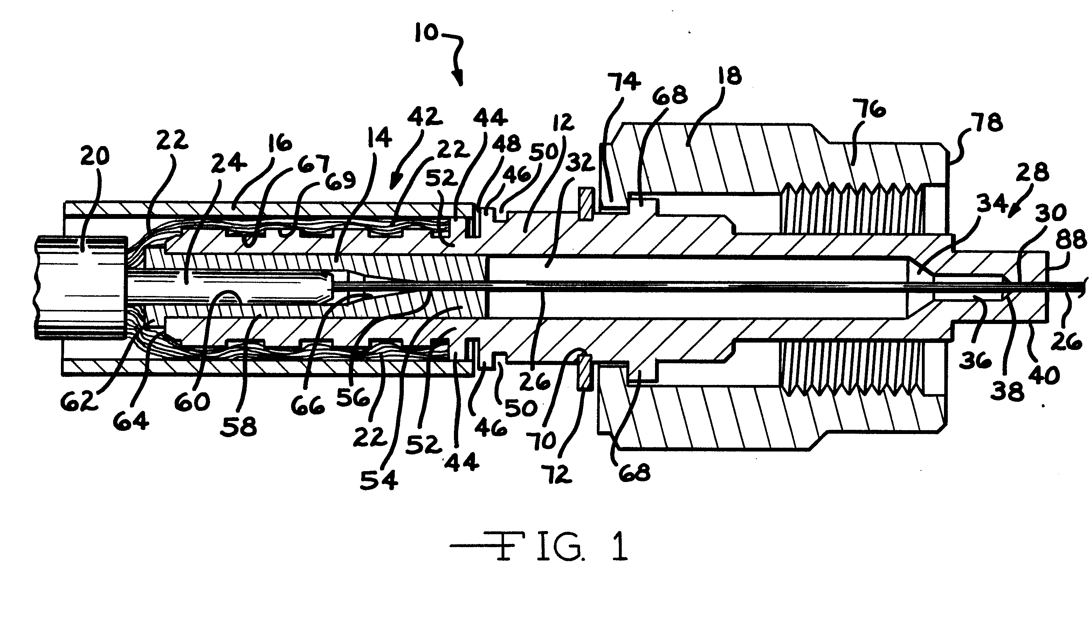

. FIG. 1 shows a first embodiment of the invention prior to crimping of the crimping sleeve or ferrule to retain the strength members and optical fiber.

FIG. 2 shows the connector of FIG. 1 subsequent to crimping, with the strength fiber and the optical fiber securing retained.

FIG. 2A is a partial sectional view of the tip of the connector of FIG. 1 after the optical fiber is severed and polished.

FIG. 3 shows a second embodiment of the invention, with a collet means in position for urging towards assembled position.

FIG. 4 shows the connector of FIG. 3, with the collet means further inserted in the body means and seizing the buffer member or inner jacket of the fiber optic cable.

FIG. 5 shows the connector of FIG. 3, with the collet means fully inserted into the body means, and seizing both the buffer or inner jacket and optical fiber core.

FIG. 5A is a partial sectional view of the tip of the connector of FIG. 3, following severing and polishing of the fiber end.

## DESCRIPTION OF THE PREFERRED EMBODIMENTS

It should be preliminarily noted that the illustrated embodiments of the invention are shown as being made of metal, producing a connector according to the invention which may be used in environments where an all metal, adhesive-less connector is desirable due to temperature or other environmental factors, an equally preferred connector according to the invention may also be made of plastic material, without significant variation in the structure of the invention, producing a connector which is low in cost and shares all other advantages and features of the invention.

Turning now to FIG. 1, a fiber optic connector 10 which is the first preferred embodiment of the invention is illustrated in section. Fiber optic connector 10 includes a body means 12, a collet means 14, a crimping ferrule means 16 and a connector shell means 18. The illustrated fiber optic cable includes an outer jacket 20, strength member fibers 22, a buffer or inner jacket 24 and an optical fiber 26. Body means 12 includes a first end portion 28 including a bore 30 for closely receiving optical fiber 26. Body means 12 also includes a bore 32 for receiving collet means 14. Bore 32 has a tapered transition portion 34, opening into a bore 36 between bore 30 and bore 32. Bore 36 includes a tapered transition portion 38, opening into bore 30. Bore 36 is illustrated as being lesser in diameter than bore 32. Bore 36 and transition sections 34 and 38 serve as guide surfaces for guiding fiber 26 into bore 30 when it is inserted into connector 10. As is conventional, first end portion 28 has an exterior diameter 40 adapted to be received in a connector socket or the like, not shown.

Body 12 has a first exterior surface portion 42 including a first protruding portion 44 adapted to be deflected radially inwardly by the crimping ferrule 16 when it is crimped. An annular protrusion 46 adjacent protrusion 44 defines a stop surface 48, for correctly positioning crimping ferrule 16. An annular groove 50 adjacent protrusion 46 serves as a strain barrier, to allow deformation of protrusion 44 and adjacent portion 52 of body means 12 without distorting the remainder of body means 12.

Collet means 14 includes a split collet end portion 54 defining an opening 56 for receiving optical fiber 26 therethrough, a generally-tubular body section 58 having an inner diameter 60 adapted to receive buffer or inner jacket 24 and an annular flange 62 defining a stop member for correctly positioning portion 54 adjacent protrusion 44, when flange 62 is in contact with end surface 64 of body means 12.

Collet means 14 defines a tapered guide portion 66 intermediate inner diameter 60 and opening 56, for guiding fiber 26 into opening 56 during assembly of the connector 10.

As illustrated, strength member fibers 22 are disposed between crimping ferrule 16 and first exterior surface portion 42. First exterior surface portion 42 preferably defines a knurled surface, the knurled surface being defined by a series of annular grooves or depressions 67 defined between annular protrusions 69. As illustrated, annular protrusions 69 extend a radially lesser amount than protrusion 44.

An intermediate portion of body means 12 includes an annular protrusion 68 spaced from an annular snap ring groove 70, in which snap ring 72 is placed. Annular protrusion 68 and snap ring 72 entrap a flange portion 74 of connector shell means 18, to retain shell means 18 to body means 12. Shell means 18 is shown as having an internally-threaded portion 76 adjacent its open end 78, for fastening connector 10 to a connector socket, not shown. As will be apparent, shell 18 may also be provided with other fastening means, such as a bayonet groove for mating with pins on a bayonet socket connector, not shown, or provided with pins, for mating with bayonet grooves on the connector socket.

It should be noted that, while all grooves and protrusions which form structural features of connector 10 are preferably annular in nature, it is not necessary that they be annular in shape to provide a connector which meets the objectives, features and advantages of the invention.

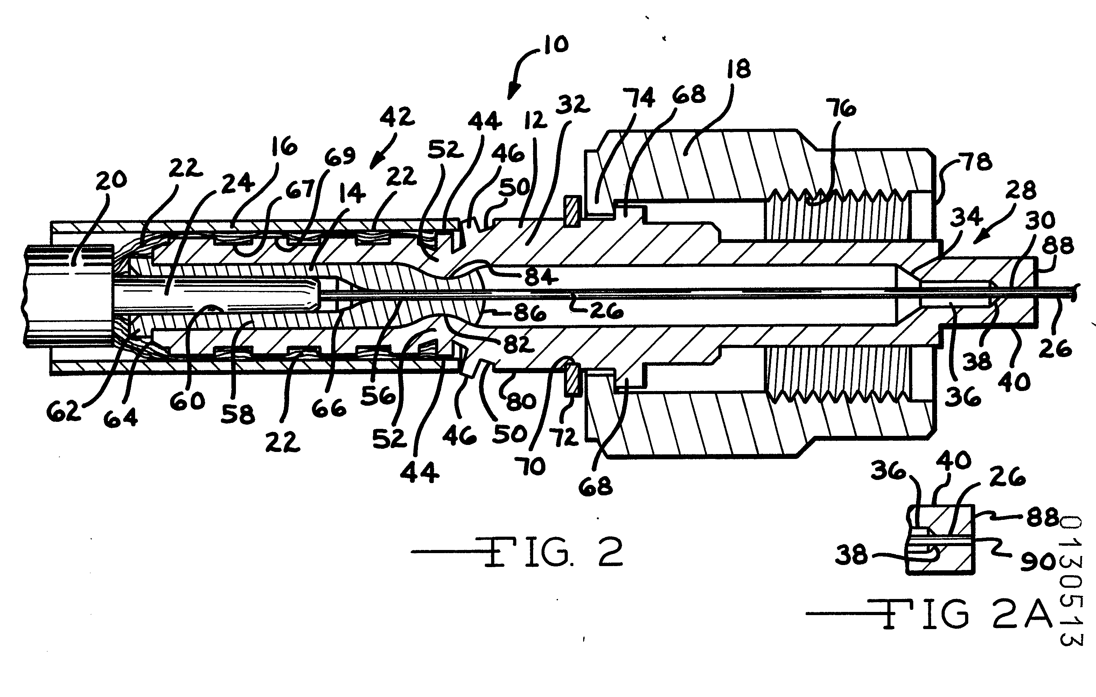

Turning now to FIG. 2, a view of the connector of FIG. 1 after crimping ferrule means 16, generally tubular in shape, is crimped to retain strength member fibers 22 to body means 12. As can be seen, first protruding portion 44 and adjacent portion 52 have been deformed radially inward, annular groove 50 serving to prevent distortion of portion 80 of body 12 between groove 50 and groove 70. The radially inward deformation of portion 52 defines an inwardly-directed hump 82. As can be seen, this deformation produces corresponding deformation of collet means 14, tightly seizing optical fiber 26, and forming an inwardly-directed recess 84 spaced from end surface 86 of collet means 14, which cooperates with hump 82 to retain collet means 14 in body means 12.

Optical fiber 26 is then severed in conventional fashion at end surface 88 of first end portion 28, and polished in conventional fashion, to produce a polished end surface 90 on optical fiber 26 at end surface 88, as shown in FIG. 2A.

Thus, assembling a fiber optic connector according to the illustrated first embodiment of the invention requires only preparing the end of the fiber optic cable in conventional fashion, sliding crimping ferrule means 16 over the cable in preparation for installation, placing collet means 14 over the prepared end, inserting collet means 14 into the bore defined by inner diameter 60, placing strength fiber means 22 over surface portion 42, sliding crimping ferrule means 16 into place, and crimping crimping ferrule means 16, before conventional severing and polishing of the end of the optical fiber. As can be seen, this is a quick and simple task, as compared to the task of assembling prior known optical fiber connectors, with only one crimping operation, and no requirement for glues or adhesives. Also, as noted above, all components of connector 10 may be made of metal, for severe environments, or alternatively connector 10 may be fabricated of plastic, preferably with a metallic crimping ferrule means 16, to provide a connector 10 for less severe environments.

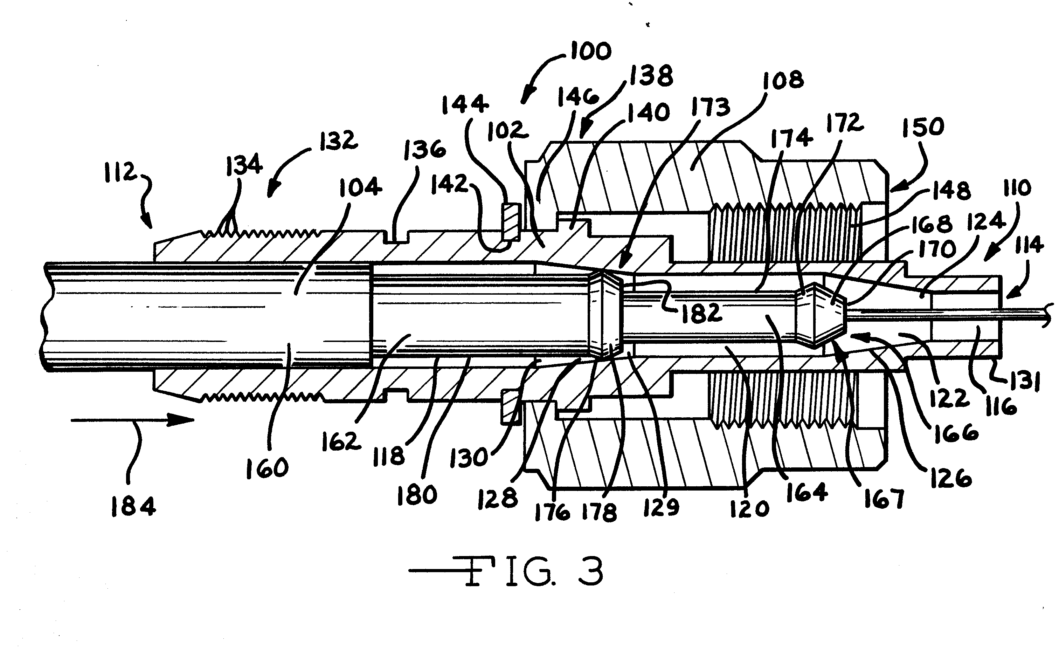

Turning now to FIG. 3, there is shown a second embodiment of the invention. Fiber optic connector 100 includes a body means 102, a collet means 104, a crimping ferrule means 106, not shown in FIG. 3, and a connector shell means 108.

Body means 102 has a first end 110, a second end 112, and includes an axial bore 114 for receiving collet means 104. Axial bore 114, as illustrated, includes a cylindrical portion 116 adjacent end 114, a cylindrical portion 118 adjacent end 112, and a cylindrical portion 120 intermediate portions 116 and and 118. A first tapered bore portion 122 interconnects portions 116 and 120, with its smaller end 124 opening into portion 116, and its larger end 126 opening into portion 120. A second tapered bore portion 128 is interposed between portions 118 and 120, with its smaller end 129 opening into portion 120 and its larger end 130 opening into portion 118.

Body means 102 also includes an exterior diameter portion 131 adjacent end 110, adapted to cooperate with a conventional connector socket, not shown, and a knurled exterior surface portion 132 adjacent end 112, shown as having a plurality of serrations or diamond knurling 134 and a groove 136, which is preferably an annular groove. An intermediate portion 138 includes a projection 140, preferably annular in nature, and a snap ring groove 142 spaced from projection 140 for retaining a snap ring 144. Snap ring 144 and projection 140 cooperate to entrap a flange portion 146 of connector shell means 108. Connector shell means 108 is shown as including an internally-threaded portion 148 adjacent open end 150, although, as before, connector shell means 108 may also be adapted to cooperate with a male or female bayonet connector socket.

As shown in FIG. 3, the exterior of collet means 104 includes a first diameter portion 160, a second diameter portion 162 having a diameter smaller than that of portion 160, and a third diameter portion 164, having a diameter smaller than that of portion 162. Third diameter portion 164 includes collet end portion 166, which preferably, but not necessarily, includes an annular radial projection 167 including a first tapered portion 168, tapering outwardly from end 170 of collet means 104 and a second tapered portion 172, tapering outwardly from surface 174 of third diameter portion 162 and intersecting portion 170. Adjacent third diameter portion 164, second diameter portion 162 preferably, but not necessarily, includes a second radially-projecting portion 173 defined by a first tapered portion 176, tapering outwardly from surface 180 of second diameter portion 162, and a second tapered portion 178 tapering outwardly from shoulder 182 separating portions 162 and 164 and intersecting portion 178. As will be apparent, projecting portions 167 and 173 will be deflected radially inward by the walls of tapered bore portions 122 and 128 as collet means 104 is moved in the direction of arrow 184.

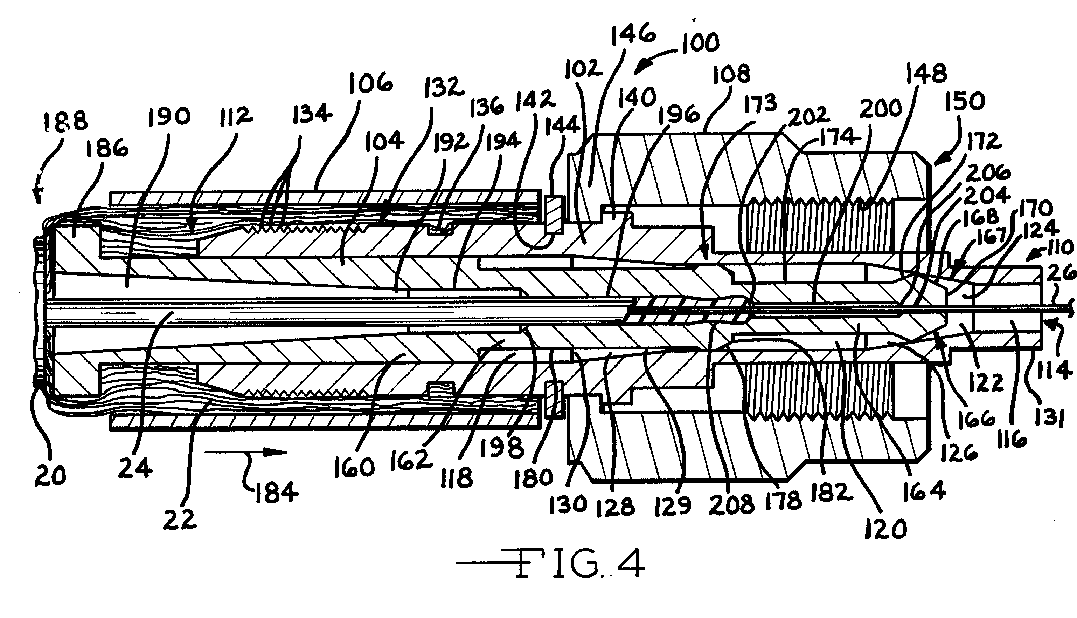

Turning now to FIG. 4, the result of partial movement of collet means 104 in the direction of arrow 184 can be seen. Also, in FIG. 4 it can be seen that collet means 104 defines a flange 186 at second end 188. Flange 186 defines a stop means for limiting the motion of collet means 104 in the direction of arrow 184. As also can be seen in this view, collet means 104 includes an axial bore, composed of several sections. This axial bore includes a tapered portion 190, having its narrow end 192 opening onto a cylindrical bore portion 194. Cylindrical bore 194 is joined to a cylindrical bore portion 196 of lesser diameter through a tapered transition section 198, and bore portion 196 in turn opens into cylindrical bore portion 200 through a tapered transition section 202 between bore portions 200 and 196. Bore portion 200 in turn is connected to an opening 204 in collet end portion 166, which is joined to bore portion 200 by tapered section 206. As can be seen, tapered portions or sections 190, 198, 202 and 206 serve as guide surfaces for the insertion of buffer or inner jacket 24 and optical fiber 26. Optical fiber 26 can be seen passing through opening 204, and being loosely received in bore portion 200, to allow it to expand and contract with variations in temperature and the like. Buffer or inner jacket 24 is closely received in cylindrical bore portion 196.

As can be seen in this view showing partial insertion of collet means 104, radially-projecting portion 173 has been deformed in a radially-inward direction by cooperation of radially-projecting portion 173 with second tapered bore portion 128, causing a constriction or inwardly-directed hump 208 in bore 196, which seizes and retains buffer or inner jacket 24.

Strength member fibers 22 are shown disposed between crimping ferrule means 106 and knurled exterior surface portion 132. In this view, crimping ferrule means 106 is in its uncrimped condition.

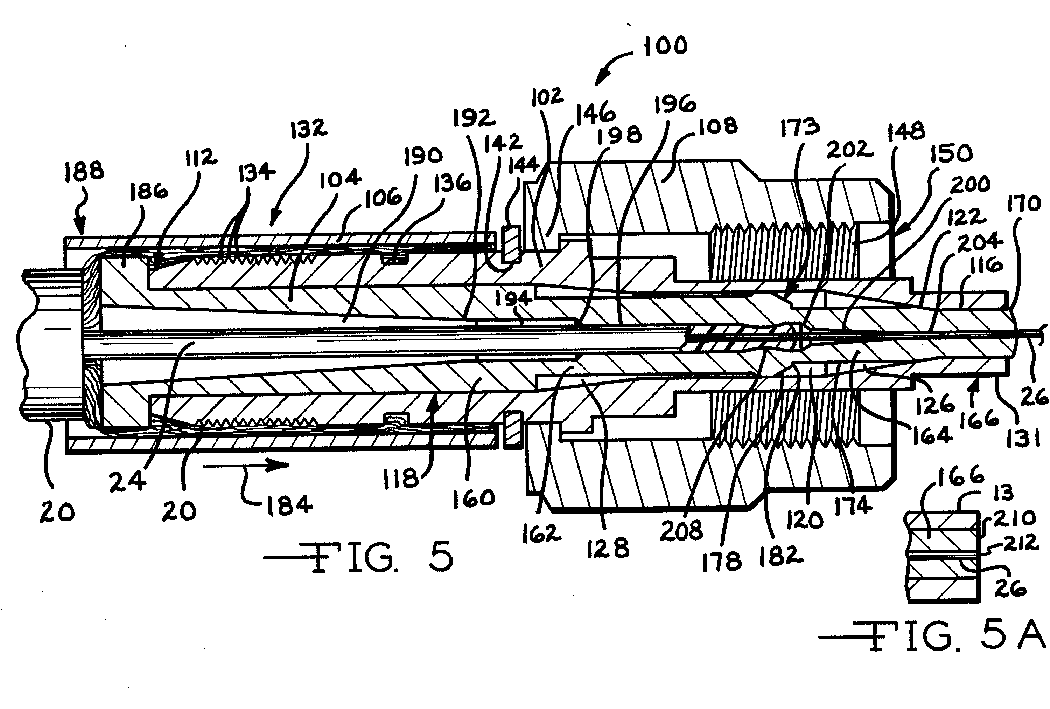

Turning now to FIGS. 5 and 5A, the final assembled position and configuration of collet means 104 is shown. As illustrated, when flange or stop means 186 is adjacent second end 112, collet end portion 166 is in cylindrical bore portion 116, having been deflected radially inward by first tapered bore portion 122, so that it is no longer visible. The resulting deformation causes, as illustrated, a partial collapse of cylindrical bore portion 200, and a slight outward bulging of end 170 of collet end portion 166. As illustrated in FIG. 5A, this portion would be removed during the final polishing of the connector after severing optical fiber 26 adjacent end 170. As illustrated, collet end portion 166, after polishing, would have a flat end portion 210 flush with polished end surface 212 of optical fiber 26. Then, crimping ferrule means is crimped about knurled exterior surface portion 132, to securely retain strength member fibers 22.

Thus, in both embodiments of the invention, an assembly step which is typical of the assembly procedure for certain commercially-available fiber optic connectors simultaneously accomplishes the

-14-

secure retention of the optical fiber of a fiber optic connector, without adhesive, and without the necessity of separate assembly steps. Also, a fiber optic connector is provided which can be made either entirely of metal, or of plastic material without any substantial modifications of structure.

As will be apparent, numerous modifications and variations of the disclosed invention may be made by one skilled in the art, without departing from the spirit and scope of the invention.

CLAIMS:

1. A fiber optic cable connector, comprising:

    a body means;

    a collet means;

    a crimping ferrule means;

    said collet means having a bore therethrough and a first collet end portion adapted to retain the core of said fiber optic cable;

    said body means having a first end portion adapted to receive said core therethrough, and a second end portion including a first bore portion for receiving said collet means therein and including a first exterior surface portion;

    said crimping ferrule being adapted to be disposed about and enclose said first exterior surface portion and entrap a portion of a strength member of said fiber optic cable therebetween;

    said first exterior surface portion including a first protruding portion adapted to be deformed radially inwardly by said crimping ferrule to deform said body means radially inwardly adjacent said first collet end portion to cause said first collet end portion to seize said core of said fiber optic cable.

2. A fiber optic cable connector according to claim 1, wherein:

    said first exterior surface portion includes a plurality of protrusions for securely retaining a strength member of said cable intermediate said annular ring portion and said second

0130513

-16-

end portion, said protrusions protruding a lesser distance from said first exterior surface portion than said first annular ring portion.

3. A fiber optic cable connector according to claim 1, wherein:

said collet means further includes a second end portion distal to said first collet end portion, said second end portion including stop means adapted to cooperate with said second end portion of said body means for positioning said first collet end portion in said bore adjacent said first protruding annular ring portion.

4. A fiber optic cable connector according to claim 1, wherein:

said body means includes a second bore portion including an enlarged portion disposed between said first collet end portion and said first end portion when said collet means is disposed in said first bore portion of said body means.

5. A fiber optic cable connector, comprising:
    a body means;
    a collet means;
    a crimping ferrule means; and
    said collet means having a bore therethrough and a first collet end portion adapted to retain the core of said fiber optic cable;
    said body means having an axial bore therethrough for receiving said collet means therein;

said bore having a first tapered portion adjacent a first end of said body means;

said first tapered portion being adapted to urge said first collet end portion radially inwardly to seize said core of said fiber optic cable as said first collet end portion is moved in said axial bore towards said first end of said body means.

6. A fiber optic cable connector according to claim 5, wherein:

said bore includes a second tapered portion intermediate said first end of said body means and a second end of said body means;

said collet means includes a first radially protruding portion intermediate said first collet end portion and a second end of said collet means;

said second tapered portion being adapted to urge a portion of said collet means adjacent said first radially protruding portion radially inward to seize a buffer member of said fiber optic cable as said first collet end portion is moved in said axial bore towards said first end of said body means.

7. A fiber optic cable connector according to claim 5, wherein:

said collet end portion includes a second radially protruding portion, said first portion being urged radially inward by said second tapered portion as said first collet end portion is moved in said axial bore toward said first end of said body means.

8.    A fiber optic cable connector according to claim 5, wherein:

said collet means further includes a second end portion including stop means adapted to cooperate with said second end portion of said body means for limiting said movement of said first collet end portion towards said first end of said body means.

9.    A fiber optic cable connector according to claim 5, wherein:

said body means includes a second bore portion including an enlarged portion disposed between said first collet end portion and said first end portion of said body means when said collet means is disposed in said first bore portion.

—FIG. 1

0130513

FIG. 2

FIG 2A

FIG. 3

0130513

FIG. 4

0130513

0130513

FIG. 5

FIG. 5A